# EUROPEAN PATENT APPLICATION

(11) **EP 3 252 691 A1**
(43) Date of publication of application: **06.12.2017**
(21) Application number: 16743104.8
(22) Date of filing: 13.01.2016
(51) Int. Cl.: G06Q 10/10

(54) **SYSTEM AND PROGRAM**

(30) Priority: 27.01.2015 JP 2015013491
(71) Applicant: NTT DOCOMO, INC., Chiyoda-ku, Tokyo 100-6150 (JP)
(72) Inventor: KURISU, Toshiharu, Tokyo 100-6150 (JP); SASAKI, Maki, Tokyo 153-0042 (JP)
(74) Representative: Hoffmann Eitle
(86) International application number: PCT/JP2016/050857
(87) International publication number: WO 2016/121500

(57) **Abstract**

Estimating unit 112 estimates an alarm notification time. Presenting unit 113 presents the estimated alarm notification time to a user. Setting unit 111 sets an alarm notification time based on a user's operation performed relative to the presentation of the estimated alarm notification time. When doing so, setting unit 111, on detecting that presenting unit 113 has not presented the estimated alarm notification time by a predetermined point in time prior to the estimated alarm notification time, sets the alarm notification time in the absence of a user's operation. Notification unit 114 activates an alarm at the set notification time notified by setting unit 111.

## Description

### Technical Field

The present invention relates to a technique for setting an alarm.

### Background Art

There is known in the art a technique for setting an alarm. Patent Document 1 discloses a technique of calculating and setting an alarm notification date and time based on environmental information such as traffic information or weather information, and for setting off an alarm at the set date and time.

### Prior Art Document

### Patent Document

Patent Document 1: JP 2009-186324 A1

### Summary of the Invention

### Problems to be Solved by the Invention

The technique disclosed in Patent Document 1, which enables automatic setting and activation of an alarm at a calculated alarm notification date and time, facilitates setting of an alarm by a user. However, there is a problem inherent in this technique in that the alarm may be activated at an inconvenient time, such as when a user is in a meeting or on a train. This problem arises because the setting and activation of the alarm is carried out, regardless of the user's circumstances.

In view of the problem stated above, it is an object of the present invention to facilitate setting of an alarm by a user, and prevent an alarm from being activated at a time that is inconvenient for the user.

### Means for Solving the Problems

To achieve the object, the present invention provides a system comprising: an estimating unit that estimates an alarm notification time; a presenting unit that presents the estimated alarm notification time to a user; and a setting unit that sets an alarm notification time based on at least one of a user's operation performed relative to the presentation of the estimated alarm notification time, a situation of a user device at which the estimated alarm notification time is presented, and information stored in the user device at which the estimated alarm notification time is presented.

The setting unit, on detecting that the presenting unit has not presented the estimated alarm notification time by a predetermined point in time that precedes the estimated alarm notification time, may set the alarm notification time in the absence of a user's operation.

The setting unit may set an alarm notification time for a particular schedule in the absence of a user's operation.

The system may further comprise a notification unit that activates an alarm at the set notification time, and the notification unit may activate an alarm differently depending on whether the alarm notification time is set according to a user's operation, or the alarm notification time is set in the absence of a user's operation.

The presenting unit may determine a necessity of an alarm for a schedule based on an attribute of the schedule, and, on determining that an alarm should be set, present the estimated alarm notification time to the user.

The attribute of the schedule may be a distance between a place at which a scheduled event will occur and a place at which the user is scheduled to be before the event occurs.

The attribute of the schedule may be a time period, a date and time belonging to the time period, a scheduled event being going to occur at the date and time.

The attribute of the schedule may be content of the schedule or an importance level of the schedule, the importance level being registered by the user.

The presenting unit may present the estimated notification time to the user by causing the estimated notification time to be displayed as information indicating content corresponding to an image, the image being selected from among plural images corresponding to different types of content, and the setting unit, after the estimated notification time is caused to be displayed as the information, may set the alarm notification depending on whether a predetermined operation has been performed.

The present invention also provides a program for causing a computer to function as: an estimating unit that estimates an alarm notification time; a presenting unit that presents the estimated alarm notification time to a user; and a setting unit that sets an alarm notification time based on at least one of a user's operation performed relative to the presentation of the estimated alarm notification time, a situation of a user device at which the estimated alarm notification time is presented, and information stored in the user device at which the estimated alarm notification time is presented.

### Effects of the Invention

The present invention facilitates setting of an alarm by a user, and prevents an alarm from being activated at a time that is inconvenient for the user.

### Brief Description of the Drawings

Fig. 1 is a diagram showing a configuration of a user device.
Fig. 2 is a diagram showing a functional configuration of the user device.
Fig. 3 is a diagram showing an example of setting screens.
Fig. 4 is a diagram showing an example of a history table.
Fig. 5 is a diagram showing an example of a notification time presented to a user.
Fig. 6 is a diagram showing an example of a screen displayed after a notification time is set.
Fig 7 is a flow diagram showing an example of a screen showing an automatically set notification time.
Fig. 8 is a diagram showing an example of a procedure carried out by the user device.
Fig. 9 is a diagram showing a user device according to a modification.
Fig. 10 is a diagram showing an example of a situation table.
Fig. 11 is a diagram showing an example of a registration screen.
Fig. 12 is a diagram showing examples of a functional configuration according to a modification.
Fig. 13 is a diagram showing an example of a screen for presenting a notification time according to a modification.

### Description of Reference Numerals

1a, 1b ··· Information-processing system, 10 ··· User device, 11 ··· Control unit, 12 ··· Storage unit, 13 ··· Display unit, 14 ··· Operation input unit, 15 ··· Sound emitting unit, 16 ··· Sensor unit, 111 ··· Setting unit, 112 ··· Estimating unit, 113 ··· Presenting unit, 114 ··· Notification unit

### Modes for Implementing the Invention

### [1] Embodiment

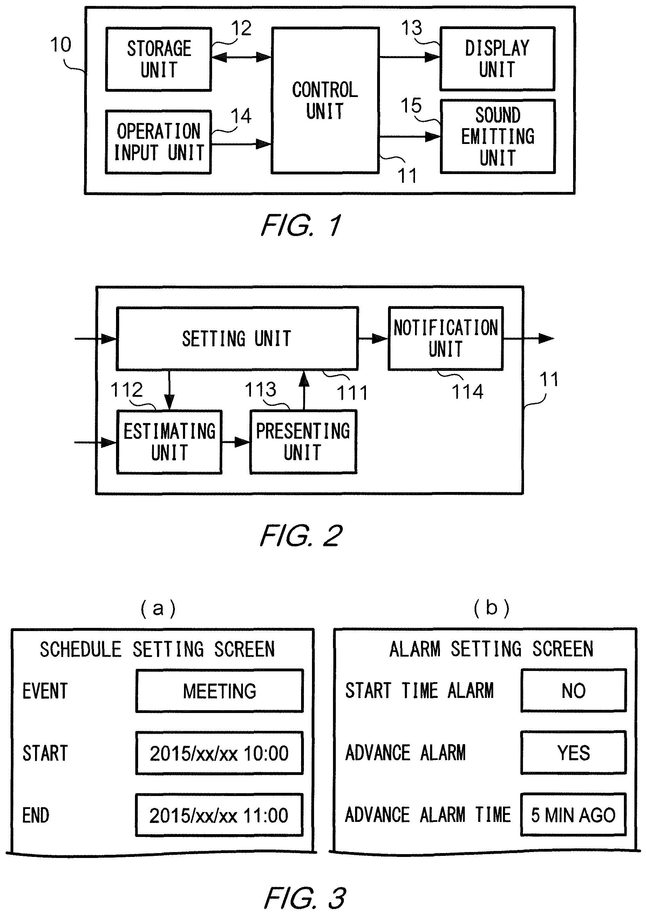

Fig. 1 shows a configuration of user device 10 according to an embodiment of the present invention. User device 10 is an information-processing device that both sets and activates an alarm. The main feature of the present invention resides in a method for setting an alarm, which method will be described in detail below.

User device 10 includes control unit 11, storage unit 12, display unit 13, operation input unit 14, and sound emitting unit 15. Control unit 11 includes a CPU (Central Processing Unit), a ROM (Read Only Memory), a RAM (Random Access Memory), and a real-time clock. The CPU executes programs stored in the ROM or storage unit 12, while using the RAM as a work area, so as to control operations of components. The real-time clock is capable of calculating a current date and time.

Storage unit 12 includes a memory such as a flash memory, and stores data and programs used by control unit 11. Display unit 13 includes, for example, a liquid crystal display, and displays an image under control of control unit 11. Operation input unit 14 includes, for example, a touch screen and/or keys, and accepts input by a user to provide input data to control unit 11. Control unit 11 performs processing according to the input data. Sound emitting unit 15 includes, for example, a speaker, and emits a sound under control of control unit 11.

Fig. 2 shows a functional configuration of user device 10. Control unit 11 of user device 10, by executing an alarm program whereby alarm-related processing is carried out, provides functions of setting unit 111, estimating unit 112, presenting unit 113, and notification unit 114, which will be described in detail in turn below.

Setting unit 111 is a means for setting an alarm notification time. In the present embodiment, setting unit 111 sets a notification time by use of one of three methods. In the first method, setting unit 111 sets a notification time based on a user's schedule, while in the second and third methods, setting unit 111 sets a definite notification time (a notification time at which an alarm is actually activated) based on an estimated notification time. First of all, the first method will be described. User device 10 stores a program for setting a schedule and an alarm, execution of which causes screens shown in Fig. 3 to appear.

Fig. 3 shows an example of screens displayed so that a user sets an alarm. Fig. 3(a) shows a schedule setting screen in which there is shown a start time and an end time of a schedule, the subject of which is a "meeting." The schedule information is input by the user. Fig. 3(b) shows an alarm notification time setting screen, which corresponds to the set schedule. A user can input, via the setting screen, a setting indicative of whether a "start time alarm" is required, a notification time of which is the start time; a setting indicative of whether an "advance alarm" is required, which alarm is activated prior to the start time; and a setting indicative of whether an "advance alarm time" is required, which alarm time indicates a time at which the advance alarm is activated. The advance alarm time is expressed as an amount of time by which the advance alarm time precedes the start time. In the screen shown in Fig. 3, an advance alarm is set to be activated five minutes prior to a start time of a meeting.

Setting unit 111 sets a notification time (in the above example, five minutes prior to the start time) based on data input via the alarm setting screen. The foregoing is a description of the first method in which setting unit 111 sets a notification time based on a user's schedule. Setting unit 111, after setting a notification time using the first method, updates a history table based on set data, which table includes a history of alarm settings.

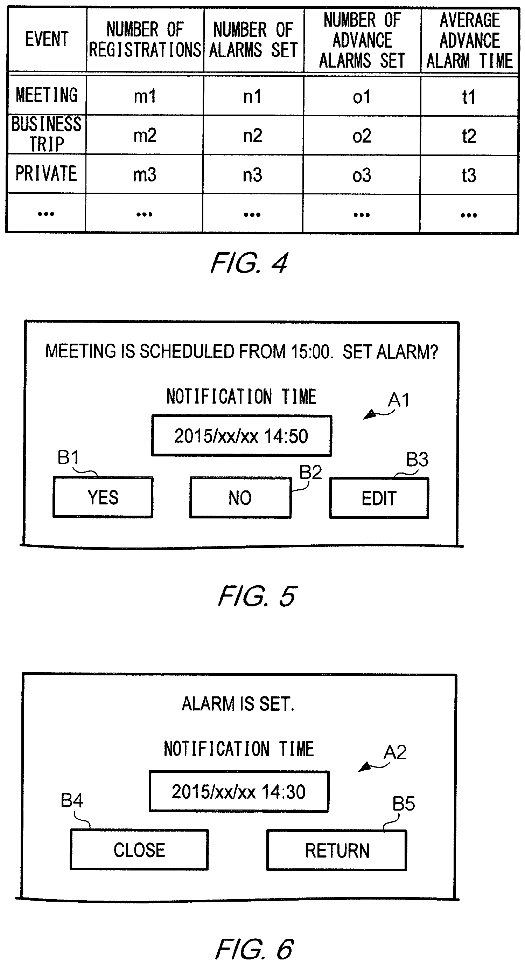

Fig. 4 shows an example of the history table, in which each of an event is associated with the number of registrations, the number of alarms set, the number of advance alarms set, and an average advance alarm time. In the history table, for example, the number of registered schedules the subject event of which is a "meeting" is "ml," from among the registered schedules, the number of schedules for which an alarm is set is "n1", and from among the registered schedules, the number of schedules for which an advance alarm is set is "o1", while an average advance alarm time is "tl." Similarly, for schedules a subject event of which is a "business trip" or "private," the number of registrations, the number of alarms set, the number of advance alarms set, and an average advance alarm time are each registered. Estimating unit 112 makes reference to the history table.

Estimating unit 112 is a means for estimating an alarm notification time. In the present embodiment, estimating unit 112 estimates a possible notification time based on a history of alarm notification times that a user has set in the past, and on a user's schedule. To estimate a notification time, estimating unit 112 identifies a scheduled event of a user that is due to occur within a predetermined time period, and performs a calculation based on data associated with an event in the schedule in the history table by dividing the number of registrations by the number of alarms set. When the calculated value is equal to or greater than a first threshold value, estimating unit 112 estimates that the start time of the schedule is an alarm notification time.

Estimating unit 112 also performs a calculation by dividing the number of registrations by the number of advance alarms set. When the calculated value is equal to or greater than a second threshold value, estimating unit 112 estimates that a time preceding the start time of the schedule by a corresponding average advance alarm time is an advance alarm notification time. The first threshold value and the second threshold value may be identical or different. As a result of the estimates, either each or neither of an alarm notification time and an advance alarm notification time is set depending on an event. Estimating unit 112 notifies an estimated notification time(s) to presenting unit 113.

Presenting unit 113 is a means for presenting to a user a notification time estimated by estimating unit 112. For example, presenting unit 113 presents to a user an estimated notification time by causing display unit 13 to display the notification time. A screen for displaying a notification time is caused to be displayed, for example, in response to a predetermined operation performed on a menu screen displayed by user device 10, such as tapping an icon on the menu screen.

Fig. 5 shows an example of a notification time presented to a user. The screen shown in the drawing contains text "Meeting is scheduled from 15:00. Set alarm?," image A1 showing a notification time "2015/xx/xx 14:50," key image B1 showing text "YES," key image B2 showing text "NO," key image B3 showing text "Edit." The notification time shown by image A1 may be edited by selecting (for example, tapping) key image B3.

If a user wishes to set an alarm at the presented notification time, s/he selects key image B1; and if the user wishes to edit the presented notification time, s/he edits the notification time by selecting key image B3, and thereafter selects key image B1. These two operations are carried out to approve an alarm setting. If a user does not wish to set an alarm for the schedule, s/he selects key image B2, whereby an alarm setting is rejected. When key image B1 or B2 is selected, presenting unit 113 notifies the selected image and a notification time shown by image A1 to setting unit 111.

In the second or third method, setting unit 111 sets a notification time based on information notified by presenting unit 113. In the second method, presenting unit 113 sets an alarm notification time based on an operation performed by a user in response to presentation of information by presenting unit 113. In a case where a notification time is presented as shown in Fig. 5, a notification time notified by presenting unit 113 indicates whether a user has performed an operation to edit a notification time. An estimated notification time that remains the same is indicative of no edit operation having been performed; on the other hand, an estimated notification time that has been changed is indicative of an edit operation having been performed. Notification of a user's selection of key image B1 is indicative of a user having performed an operation to approve setting of an alarm at a notified notification time.

Upon receipt of a notification by presenting unit 113, setting unit 111 sets a notified notification time as an alarm notification time based on a user's operation as indicated in the received notification. It is of note that notification of a user's selection of key image B2 is indicative of a user having performed an operation to reject setting of an alarm at a notified notification time. Thus, upon receipt of the notification, setting unit 111 does not set a notified notification time.

Fig. 6 shows an example of a screen that is displayed after a notification time has been set, which screen contains the text "Alarm is set.," and wherein image A2 shows a set notification time "2015/xx/xx 14:30," key image B4 shows the text "Close," and key image B5 shows the text "Return." Selection of key image B4 causes the screen to be replaced with, for example, a menu screen. Selection of key image B5 causes the screen to be replaced with, for example, the screen shown in Fig. 5, which screen enables a user to edit a notification time or cancel an alarm setting.

In a case where a user has not used user device 10 for a period of time, or the screen shown in Fig. 5 has not been displayed even though the user has used the user device, presenting unit 113 does not have an opportunity to present a notification time. In such a situation, setting unit 111 sets a notification time using the third method. In the third method, setting unit 111 automatically sets an alarm notification time in the absence of a user's operation, upon detecting that presenting unit 113 has not presented a notification time to a user estimated by estimating unit 112 by a predetermined point in time prior to the notification time.

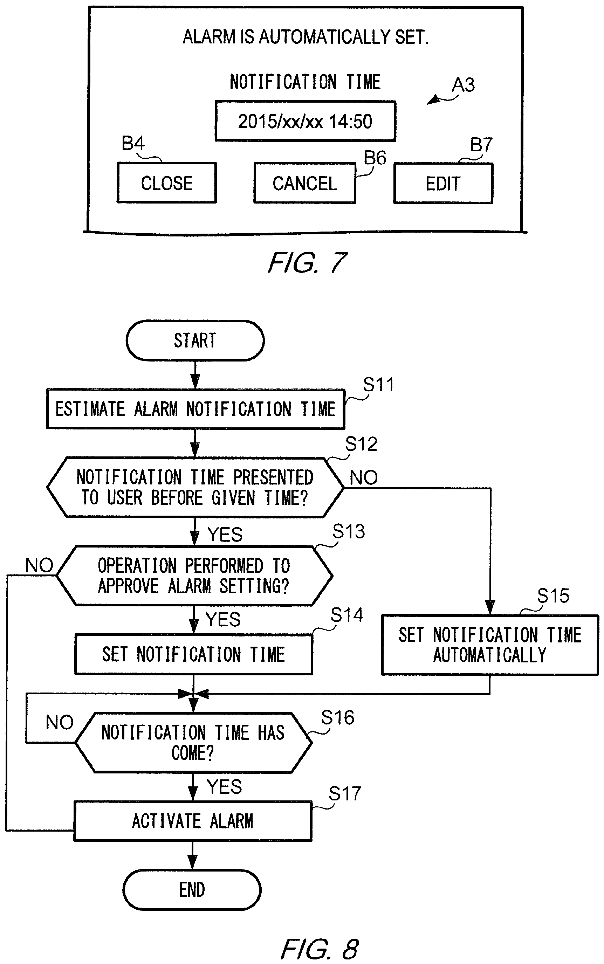

A predetermined point in time is a time that precedes an estimated notification time by a predetermined amount of time. For example, assuming that a predetermined amount of time is six hours, and that the notification time shown in Fig. 5 is estimated, setting unit 111 automatically sets a notification time "2015/xx/xx 14:50," upon detecting that the notification time has not been presented by a time "2015/xx/xx 8:50." In the present embodiment, setting unit 111 determines that an estimated notification time has not been presented, upon detecting that the notification time has not been displayed by display unit 13. After a notification is automatically set by setting unit 111, and a predetermined operation is performed relative to, for example, a menu screen, a screen as shown in Fig. 7 is displayed.

Fig. 7 shows an example of a screen in which there is shown an automatically set notification time, and which screen contains image A3 showing the automatically set notification time, key image B4 shown in Fig. 6, key image B6 showing the text "Cancel," and key image B7 showing the text "Edit." Selection of key image B6 causes setting unit 111 to cancel the automatically set notification time. Selection of key image B7 enables a user to edit the automatically set notification time, and causes key image B1, shown in Fig. 5, to appear. Selection of key image B1 after editing the notification time causes setting unit 111 to cancel the automatically set notification time, and instead set the edited notification time. When setting unit 111 sets a notification time in the first, second, or third method, the setting unit notifies the set notification time to notification unit 114, together with the method used.

Notification unit 114 activates an alarm at a notification time notified by setting unit 111. For example, notification unit 114 activates an alarm by causing sound emitting unit 15 to emit a sound. In the present embodiment, notification unit 114 activates an alarm differently depending on whether an alarm notification time is set according to a user's operation by way of the first or second method, or an alarm notification time is automatically set in the absence of a user's operation by way of the third method. For example, notification unit 114 may use sound data that differs between the former case and the latter case. The sound data may be stored in storage unit 12, so that sound emitting unit 15 emits sounds consisting of different tones.

Rather than relying on a sound tone, notification unit 114 may vary a volume or a length of a sound. Alternatively, if user device 10 includes a vibrator, notification unit 114 may activate the vibrator to cause the user device to vibrate in either the former case or the latter case, while causing a sound to be emitted. Alternatively, if user device 10 includes a communication function for making phone calls or exchanging emails, notification unit 114 may cause a ring alert to be emitted as an automatically set alarm. Automatic setting of an alarm is not noticed by a user until the alarm is activated, in which case emission of a loud sound may induce unwarranted surprise in the user. In this regard, in general, ring alerts are designed to be softer sounding than an alarm sound; accordingly, causing a ring alert to be emitted as an automatically set alarm prevents undue surprise in a user, as compared to a case in which a normal alarm sound is emitted as an automatically set alarm. It is of note that in view of the fact that an automatically set alarm is less noticeable to a user, who is not aware of the alarm setting, notification unit 114 may be caused to emit a sufficiently loud sound to attract user's attention.

A procedure by which user device 10 sets a notification time in the second or third method will now be described.

Fig. 8 shows an example of the procedure carried out by user device 10. First, control unit 11 of user device 10 estimates an alarm notification time (step S11). In the present embodiment, control unit 11 makes the estimation at a predetermined timing, which timing may include a point in time within a time period in which a user frequently uses user device 10, such as within a commuting time or in the hours before retiring to bed. Specifically, Step S11 is performed by estimating unit 112.

Subsequently, control unit 11 determines whether the estimated notification time has been presented to the user by a predetermined point in time that precedes the notification time (step S12). In the present embodiment, upon detecting that the notification time has been displayed, control unit 11 determines that the notification time has been presented. When control unit 11 makes an affirmative determination (Step S12, YES), the control unit determines whether an operation has been performed in order to approve setting an alarm at the presented notification time (step S13). In the event that control unit 11 makes an affirmative determination (Step S 13, YES), the control unit sets a notification time according to the received operation (step S14). In contrast, in the event that control unit 11 makes a negative determination (Step S 13, NO), the control unit concludes the procedure. In the present embodiment, upon detecting that an operation to reject an alarm setting has been performed, or that a predetermined time period has passed after the estimated notification time is presented, control unit 11 determines that an operation to approve an alarm setting has not been performed.

In the event that control unit 11 makes a negative determination at step S12 (NO), the control unit automatically sets the estimated notification time (step S 15). After control unit 11 performs step S 14 or S 15, the control unit repeatedly determines whether the set notification time has arrived, until such time that a determination is made that the notification time has arrived (step S16). In the event that control unit 11 makes an affirmative determination (step S16, YES), control unit 11 activates an alarm (step S 17). When doing so, control unit 11 activates an alarm differently depending on whether the notification time has been set at step S14, or at step S15. Specifically, Step S12 is performed by presenting unit 113 and setting unit 111. While steps S 13 to S15 are performed solely by setting unit 111, steps S16 and S 17 are performed by notification unit 114.

In the present embodiment, after an estimated alarm notification time is presented to a user, a notification time is set based on an operation carried out by a user relative to the presentation of the alarm notification time; accordingly, the user may edit the estimated alarm notification time or reject setting of the same if it is inconvenient to the user. If the presented notification time is acceptable to the user, s/he need not input an alarm notification time. Namely, in the present embodiment it is possible to facilitate setting of an alarm by a user, and also to prevent an alarm from being activated at a time inconvenient to a user.

Also, in the present embodiment, when an estimated notification time has not been presented to a user by a predetermined point in time, the notification time is automatically set. If an estimated notification time, which is useful for a user, is not presented to the user with the result that the notification time is not set, the user, who has not been alerted, may be late for an important event. In the present embodiment since an estimated notification time is automatically set, such a risk is reduced.

Further, in the present embodiment, characteristics of an alarm activation differ depending on whether a notification time is set by an operation performed by a user or is set automatically. Accordingly, the user is able readily to distinguish between an alarm set manually by the user and an alarm set automatically. By being able readily to distinguish between these alarms, the user is able to respond to an alarm appropriately, for example, by turning off the alarm or checking a next schedule, which is in contrast to a situation in which there is no differentiation between notification methods.

### [2] Modifications

The above embodiment is merely an example embodiment of the present invention, and may be modified in a variety of ways, as set out below. Moreover, the present embodiment and the following modifications may be implemented together in a variety of combinations,

### [2-1] Situation of User Device

Setting unit 111 may set an alarm notification time based on a situation of a user device at which a notification time is presented by presenting unit 113, rather than by way of an operation carried out by a user.

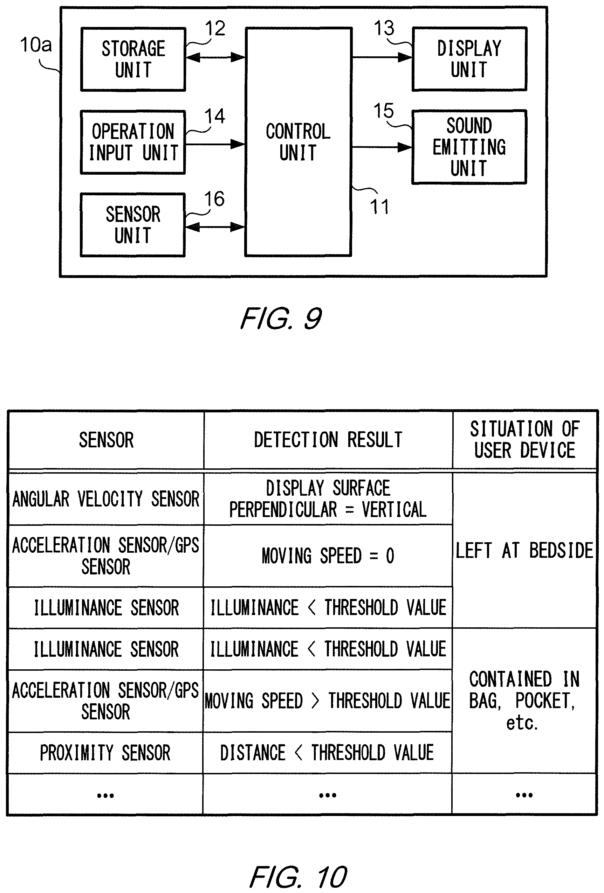

Fig. 9 shows a configuration of user device 10a according to the present modification. User device 10a includes sensor unit 16, in addition to the units shown in Fig. 1. Sensor unit 16 includes, for example, an acceleration sensor for measuring acceleration, an angular velocity sensor for measuring angular velocity, an illuminance sensor for measuring illuminance, a proximity sensor for measuring a distance to a nearby object, and a GPS (Global Positioning System) sensor for measuring a latitude and longitude of user device 10a.

Based on one or more detection results of the sensors included in sensor unit 16, setting unit 111 determines a situation of user device 10a upon presentation of a notification time. Setting unit 111 makes such a determination with reference to a situation table in which a respective detection result of one or more sensors is associated with a situation of user device 10a.

Fig. 10 shows an example of the situation table, wherein it is shown that when a value measured by the angular velocity sensor indicates that a perpendicular to a display surface is vertical, a value measured by the acceleration sensor or the GPS sensor indicates that a moving speed of user device 10a is zero, and an illuminance measured by the illuminance sensor is lower than a threshold value (namely, when the user device is not moving, the display surface is facing either upwards or downwards, and it is dark around the user device), it is determined that user device 10a has been left at a bedside.

In the situation table it is also shown that that when an illuminance measured by the illuminance sensor is lower than a threshold value, a value measured by the acceleration sensor or the GPS sensor indicates that a moving speed of user device 10a is greater than a threshold value, and a distance to a nearest object measured by the proximity sensor is less than a threshold value (namely, when it is dark around the user device, and the user device is moving while surrounded by an object), it is determined that user device 10a is contained in a bag, pocket, or the like. The above situations shown in the situation table are each situations that prevent a user from operating user device 10a.

When setting unit 111 determines that user device 10a at which a notification time is presented by presenting unit 113 is in a situation shown in the situation table, the setting unit sets the presented notification time as a definite notification time (a notification time at which an alarm is actually activated). It is of note that in another embodiment, a situation of a user device may be determined without referring to detection results of sensor unit 16. For example, if a user device is left unused for a period of time and thus the device enters a locked state or its display is set to an off state, it may be determined that the device is in a situation where it is not operable by a user.

In the present modification, when a notification time is displayed on a user device, and a user is not able to operate the device, the notification time is set as a definite notification time, which reduces a risk that the user may be late for an important event, which is in contrast to a case wherein an alarm is set without taking into account a situation of the user device.

### [2-2] Information inside User Device

Setting unit 111 may set an alarm notification time based on information stored in user device 10 at which a notification time is presented by presenting unit 113, instead of as a result of an operation performed by a user. The information stored in user device 10 refers to, for example, a history of user's operations of user device 10, based on this history setting unit 111 can identify a time period during which the user does not operate user device 10. During the identified time period, the user is unlikely to operate user device 10, and therefore if a notification time is presented during that time period, a person other than the user may be illicitly operating the user device.

Setting unit 111 does not set a notification time presented during the identified time period, regardless of whether an operation has been performed to approve or reject an alarm setting; whereas, in contrast, the setting unit sets a notification time presented during other time periods. It is of note that in another embodiment, information stored in user device 10 may refer to a history of executions of the alarm program or a history of detection results of sensor unit 16, as shown by Fig. 9. In essence, setting unit 111 based on information stored in the user device identifies a situation in which a user is unlikely to operate user device 10, and thus sets a notification time presented in such a situation, as a definite notification time, regardless of any operation performed by the user. By utilizing this processing the above-mentioned risk resulting from not setting an alarm is reduced, as compared to a case in which an alarm is not set based on information stored in the user device.

### [2-3] Combination

Setting unit 111 may set a notification time based on a combination of an operation performed by a user, a situation of a user device, and information stored in the user device. For example, setting unit 111 identifies a tendency of usage (specifically, operation and charging) of the user device for each of a time period based on information stored in the user device, including a history of user operations and a charging history. Here it is assumed that a notification time is presented in a time period during which a user is likely to use the user device while charging the user device; however, the user device is not being charged, contrary to the identified tendency.

In such a situation, setting unit 111 determines that the user device is in a state wherein it cannot be operated by the user; and accordingly, the setting unit sets the presented notification time as a definite notification time, regardless of an operation performed by the user. By utilizing this processing the above-mentioned risk can be reduced. In summary, setting unit 111 may set an alarm notification time based on at least one of an operation performed by the user relative to presentation of information by presenting unit 113, a situation of the user device at which information is presented by presenting unit 113, and information stored in the user device at which information is presented by presenting unit 113.

### [2-4] Registration of Automatic Setting

A user may pre-register a schedule for automatic setting of a notification time. The registration may be accepted by the user by way of a registration screen described below.

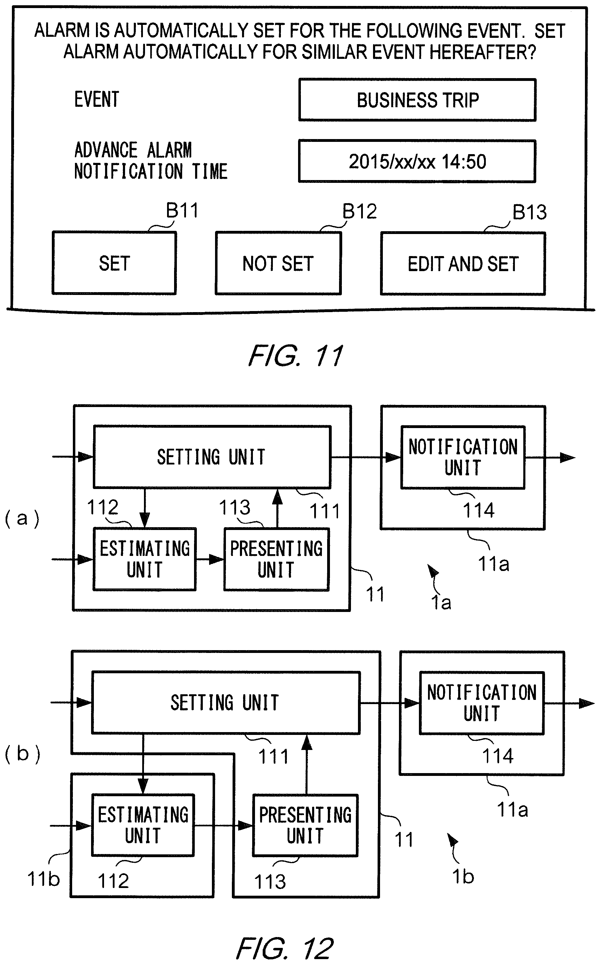

Fig. 11 shows an example of the registration screen, on which there is shown the text "Alarm is automatically set for the following event. Set alarm automatically for similar event hereafter?," and also shown is an event (specifically, a business trip) for which a notification time (specifically, an advance alarm notification time) has been set, and a notification time. By this configuration, the user is prompted by the screen to register an automatic schedule setting.

If a user selects key image B11 showing the text "Set," a notification time is hereafter automatically set for a business trip schedule. Specifically, when a business trip schedule is set, presenting unit 113 does not present to the user a notification time estimated by estimating unit 112 for the schedule, but rather setting unit 111 automatically sets the estimated notification time as a definite notification time. If the user selects key image B12 showing the text "Not set," presenting unit 113 and setting unit 111 perform the same operation as that performed in the above embodiment.

If a user selects key image B13 showing the text "Edit and set," the user is able to edit a notification time to be automatically set. For example, the user may change an advance alarm to a normal alarm, set both an advance alarm and a normal alarm, or edit an advance alarm time of an advance alarm. In addition, the user may change an alarm notification method such as a tone, volume, or length of a sound. After the data has been edited, setting unit 111 automatically sets the edited notification time and notification method.

In the present modification as described in the foregoing, presenting unit 113 does not present an estimated notification time of a pre-registered schedule to a user, but setting unit 111 automatically sets an alarm for the schedule at the notification time in the absence of an operation performed by the user. This processing eradicates the need to perform an operation to approve an alarm setting for pre-registered schedules. In other words, the processing facilitate the setting of an alarm, as compared to a case in which automatic alarm setting is not performed.

### [2-5] Particular Schedules

In the above modification, where a notification time is automatically set for a registered schedule, a notification time may be automatically set for a particular schedule that is not registered by a user. Setting unit 111 automatically sets an alarm notification time for a particular schedule in the absence of an operation performed by the user.

A particular schedule may refer to a highly important schedule. An importance level (high-medium-low) of a schedule may depend on an event, and the importance level may be selected by a user when setting a schedule. Alternatively, an importance level may be determined based on a title of an event. For example, a meeting schedule or a business trip schedule may be determined to be highly important, while a private schedule may be determined to be less important. By treating a highly important schedule as a particular schedule, failure to set an alarm for an important schedule can be prevented. Alternatively, a particular schedule may refer to a schedule belonging to a particular time period, which may include a time period during which a user is relatively likely to be late for an event, such as an early morning of a weekday. By treating a schedule belonging to a particular time period as a particular schedule, failure to set an alarm for a scheduled event for which a user is likely to be late can be prevented.

Alternatively, a particular schedule may refer to a schedule for which a time period between a time at which the schedule is set and a start time of the schedule satisfies a predetermined condition. For example, a particular schedule may refer to a schedule for which such a time period is less that a threshold value. In regard to a schedule for which such a time period is short, there exist only limited opportunities for presenting a notification time; however, by automatically setting the notification time, failure to set an alarm setting can be prevented. It is of note that a registered schedule as described above is an example of a particular schedule. In summary, the present modification, in which a schedule, an alarm for which may be set without a user's approval is treated as a particular schedule, facilitates user setting of an alarm, as compared to a case in which an alarm for a schedule is not automatically set.

### [2-6] Necessity of Alarm

Presenting unit 113 may narrow down notification times to be reported, without presenting all estimated notification times to a user. Specifically, presenting unit 113 may determine a necessity or otherwise for an alarm for each schedule, and present to the user an alarm notification time estimated by estimating unit 112 with regard to a schedule for which the presenting unit determines that an alarm should be set. Presenting unit 113 does not present an estimated notification time for a schedule for which the presenting unit determines that an alarm need not be set.

In general, as the number of schedules increases, the number of times that a user is presented with a notification time also increases; as a result, approval or rejection by a user of an alarm setting becomes increasingly complicated. In the present modification, a user is not presented with a notification time for a schedule for which it is determined that an alarm need not be set; accordingly, by the present modification it is possible to facilitate user setting of an alarm, as compared to a case in which the user is presented with notification times for all schedules.

Presenting unit 113 may determine a necessity of an alarm for a schedule based on an attribute of the schedule, which attribute may refer to a distance between a place at which a scheduled event will occur and a place at which a user is scheduled to be present at before the event occurs. In other words, the distance is a distance of movement over which the user is required to travel in order to reach the place at which the scheduled event occurs. If the distance of movement is equal to or longer than a predetermined distance, presenting unit 113 may determine that an alarm should be set for the schedule; on the other hand, if distance of movement is shorter than the predetermined distance, the presenting unit may determine that an alarm need not be set for the schedule.

A user who is aware of a start time of a schedule may nonetheless be late for the schedule by failing to take into account a travel time. In such a case, if a travel distance is long, an amount of time by which the user is late correspondingly increases. By determining a necessity of an alarm for each schedule, it is possible to facilitate a user's setting of an alarm, and also prevent a user from being very late for a schedule. It is natural that some users who are obliged to travel a long distance will leave somewhat early, while conversely when they are obliged to travel only a short distance they may leave late and thus arrive late at the schedule as a result of failing to estimate with care a required travel time. For such a user, if a distance of movement is shorter than a predetermined distance, presenting unit 113 may determine that an alarm should be set for a schedule; while, if the distance of movement is equal to or longer than the predetermined distance, presenting unit 113 may determine that an alarm need not be set for the schedule. Implementation of such processing enables setting of alarms by a user to be facilitated, while also preventing the user from being very late for a schedule.

An attribute of a schedule may refer to a date and time at which a scheduled event will occur, instead of a distance of movement. Presenting unit 113 may determine a necessity of an alarm for a schedule based on whether a date and time at which a schedule will occur falls within a particular time period, during which a user is relatively likely to be late for the event, such as an early morning of a weekday. As a result of this processing, a notification time is likely to be presented for a schedule that is due to occur during such a particular time period, and thus an alarm is likely to be set for the schedule. In contrast, a notification time is not presented for a schedule of an event that will occur during other time periods, and an alarm is not set for the schedule. Despite this, an increase in late arrivals does not occur because within other time period a user is not likely to be late for a scheduled event. By treating a date and time at which a schedule will occur as an attribute of a schedule, it is possible to effectively make a user's operation of approving or rejecting an alarm setting lead to decrease in late arrival, as compared to a case in which such an attribute is not considered.

An attribute of a schedule may refer to content of the schedule. For example, presenting unit 113 may determine that an alarm should be set for a meeting schedule or a business trip schedule, while determining that an alarm does not need to be set for a private schedule. Names of events for which an alarm should be set may be recorded in storage unit 12, and referred to by presenting unit 113. In another embodiment where the schedule setting screen includes a field for inputting a summary of a schedule, presenting unit 113 may determine content of the schedule by determining whether an event and the summary contain particular words.

An attribute of a schedule may refer to an importance level of a schedule, which is registered by a user. A user may register an importance level when setting a schedule. Presenting unit 113 determines that an alarm should be set for a schedule important to a user, regardless of content of the schedule, and presents a notification time for the schedule to the user. As a result, failure to set an alarm for an important schedule can be prevented.

### [2-7] Devices for Providing Functions

The functions shown by Fig. 2 may be provided by a device different from that according to the above embodiment or modification.

Fig. 12 shows examples of a functional configuration according to the present modification. Fig. 12(a) shows information-processing system 1a, in which control unit 11 of user device 10 provides functions of setting unit 111, estimating unit 112, and presenting unit 113, and control unit 11 a of, for example, a wearable device including a sound emitting unit provides a function of notification unit 114. User device 10 and the wearable device are capable of communicating with each other.

Fig. 12(b) shows information-processing system 1b, in which control unit 11 of user device 10 provides functions of setting unit 111 and presenting unit 113, control unit 11a provides a function of notification unit 114, and control unit 11b of, for example, an external server provides a function of estimating unit 112. User device 10 and the server are capable of communicating with each other. The server may be operated by a service provider who provides registered users with a service of estimating an alarm notification time. The server collects schedule information from user device 10, based on which the server estimates a notification time to report the same to the user device.

Instead of the server, a computing resource provided by cloud computing may provide a function of estimating unit 112. As described in the foregoing, the functions provided in the present invention may be provided by a system including different devices. It is of note that user device 10 according to the above embodiment, which provides the functions, can be said to be a system.

### [2-8] Operation of User

In the above embodiment, a user's operation may refer to an operation to display a notification time estimated by estimating unit 112. Specifically, setting unit 111 may set an alarm notification time based on whether a user has performed an operation to display a notification time estimated by estimating unit 112. In a case where the processing is carried out, display of key images B1 and B2 shown in Fig. 5 is omitted. Setting unit 111, on only detecting that image A1 showing a notification time has been displayed, sets the notification time as a definite notification date. By bringing together an operation to cause a notification time to be displayed and an operation to set an alarm setting, setting of alarms by a user is facilitated, as compared to a case in which the two operations are needed.

### [2-9] Methods for Presenting Notification Time

Presenting unit 113 may present a notification time using a method different from that used in the above embodiment. For example, presenting unit 113 may present a notification time to a user by outputting a voice message to convey the information shown in Fig. 5. In response to the voice message, the user may input by voice an operation to approve or reject an alarm setting, or may perform the operation relative to a screen. Alternatively, presenting unit 113 may present a notification time estimated by estimating unit 112 to a user by displaying the notification time as a preview (information indicative of content) of schedule information, which information may be selected from among plural content including the schedule information, news, gourmet information, and weather information.

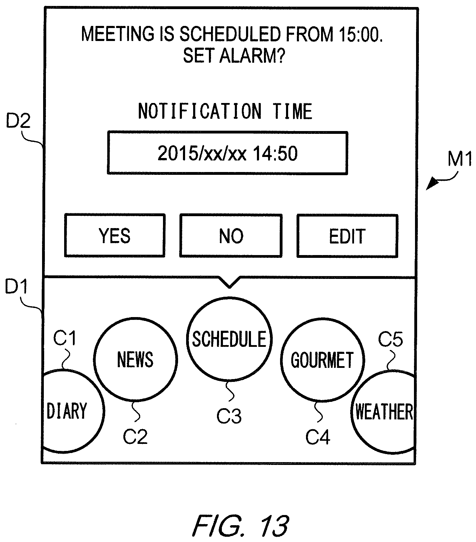

Fig. 13 shows an example of a screen according to the present modification, in which a notification time is presented. The screen is menu screen M1 of user device 10, which includes area D1 and area D2. Area D1 is a display area in which plural images (hereinafter, "icons") corresponding to different types of content are shown. In area D1, five icons C1 to C5 are arranged. It is of note that the number of icons is not limited to five, and may be four or less, or six or more. In area D1, only some of the icons are shown.

The icons may be set by a user. Each icon includes text (for example, diary, news, gourmet, schedule, or weather) or an image showing a menu name (a brief summary of content) of content. For example, icon C3 includes text "Schedule," which indicates a menu name of content designed to display schedules. Icon C4 includes text "Gourmet," which indicates a menu name of content designed to display gourmet information (for example, restaurant information) based on a location of user device 10.

The icons are caused to move cyclically by a user's operation to drag or flick an icon. When moving cyclically, the icons, while maintaining the same sequence, disappear and reappear on menu screen M1. For example, icon C1, if caused to move anticlockwise, disappears from menu screen M1; however, if the icons are further caused to move in the same direction, icon C1 reappears on the screen. When a user performs a predetermined operation to cause content corresponding to an icon to be displayed (for example, an operation to tap an icon whose preview information is displayed), an application program corresponding to the icon is executed, whereby the content is displayed.

Area D2 is a display area in which preview information corresponding to an icon is shown, the icon being selected from among icons shown in area D1. Preview information is information indicative of content, based on which a user is able to confirm at least a part of the content, without browsing the content in its entirety. Preview information includes text or an image included in content, an edited or processed version (for example, a thumbnail image) of the text or image, or text or an image describing content.

In the screen shown in Fig. 13, a "Schedule" icon is shown at the center of area D1, and the text and key images shown in Fig. 5 are shown in area D2. On the screen, presenting unit 113 presents an estimated notification time to a user by displaying the notification time as preview information of content corresponding to the selected "Schedule" icon C3. After the estimated notification time is displayed as preview information, setting unit 111 sets an alarm notification time based on whether the user has performed a predetermined operation.

The predetermined operation refers to, for example, an operation to approve setting an alarm at the presented notification time, which may be performed relative to a key image displayed as the preview information, or may be accepted after icon C3 is tapped to execute an application program corresponding to the content. In response to the predetermined operation, setting unit 111 sets the presented notification time as a definite notification time. It is of note that in contrast to the display example shown in Fig. 13, in which a notification time is presented as preview information of content designed to display schedules, a notification time may be presented as preview information of content designed to set an alarm.

The predetermined operation may refer to an operation to cause an estimated notification time to be displayed as preview information. When an operation to move "Schedule" icon C3 to a predetermined position is performed, setting unit 111 sets a notification displayed as preview information as a result of the operation, as a definite notification time. By bringing together an operation to cause a notification time to be presented and an operation to approve setting an alarm, setting of an alarm by a user is facilitated, as compared to a case in which the two operations are needed.

The predetermined operation may refer to an operation to tap, flick, or drag icon C3 displayed at a predetermined position. A tap operation is, specifically, an operation to cause content to be displayed, and flick and drag operations are operations to move an icon. Instead of setting a notification time in response to a predetermined operation, setting unit 111 may set a notification time when a predetermined operation has not been performed. For example, setting unit 111 may set a notification time on detecting that an operation to tap icon C3 displayed at a predetermined position has not been performed; however, an operation to move the icon has been performed. On the other hand, if the tap operation is performed to cause content to be displayed, setting unit 111 sets a notification time according to a user's operation to select a key image, for example, as shown in Fig. 5, without setting a notification time in response to the operation to move the icon.

On the screen shown in Fig. 13, existence of an estimated notification time may be emphasized by use of a predetermined image superimposed on icon C3, a change in appearance of icon C3, or a predetermined image displayed somewhere on menu screen M1. An estimated notification time may be displayed within an enlarged icon by presenting unit 113. In essence, a notification time may be displayed by presenting unit 113so as to attract a user's attention.

### [2-10] Timing for Presenting Notification

In the above modification, in which presenting unit 113 presents a notification time in response to an operation to tap an icon or an operation to move an icon to a predetermined position (in other words, display of preview information), the presenting unit presents a notification time at another timing. For example, presenting unit 113 may present a notification time at startup of user device 10, at a fixed date and time, or at a fixed time interval. To present a notification time in such a manner, the alarm program, which provides a function of presenting unit 113, is started at startup of user device 10, and continues to run. Presenting unit 113, even when user device 10 is locked or whose display is in an off-state, temporarily causes a screen to be displayed to present a notification time, as in the case of a screen notifying arrival of a new email.

Presenting unit 113 may cause a notification time to be displayed at a different timing depending on a situation of user device 10. For example, presenting unit 113, in a situation in which user device 10 is repeatedly operated by a user, may cause a notification time to be displayed in response to an operation to tap an icon, while in a situation in which the user device is not operated by the user (specifically, a situation in which detection results shown by Fig. 10 are acquired, or a situation in which the user device is locked or its display is in an off-state), causing a notification time to be displayed at a fixed time interval. In the situation in which user device 10 is operated by a user, since a notification time is caused to be displayed in response to a user's predetermined operation, a problem that an automatically displayed notification time hinders a user's operations is avoided. In the situation in which user device 10 is not operated by a user, since a notification time is repeatedly caused to be displayed by presenting unit 113, the notification time is likely to be noticed by the user, as compared to, for example, a case in which a notification time is displayed once.

Presenting unit 113 may cause a notification time for a schedule to be displayed at a time that precedes the start time of a schedule by a predetermined amount of time, so that a user is able to know how soon a scheduled event will occur by seeing the displayed notification time. After causing the notification time to be displayed at the preceding timing, presenting unit 113 may repeatedly cause the notification time to be displayed until a user's operation performed relative to the displayed notification time, such as an operation to approve, reject, or edit an alarm setting, is detected.

Presenting unit 113 may vary the predetermined amount of time depending on content or an importance level of a schedule. For example, presenting unit 113 may increase the predetermined amount of time in proportion to an importance level of a schedule, so that a user has a better chance to see a notification time of an important schedule, while the number of instances of repeatedly causing a notification time of an unimportant schedule to be displayed is decreased so that power consumption of user device 10 is reduced. Instead of or in addition to varying the predetermined amount of time, presenting unit 113 may vary intervals at which the presenting unit repeatedly causes a notification time to be displayed. In essence, presenting unit 113 may cause a notification time to be displayed so that a user has a better chance to see the notification time, while power consumption of user device 10 is reduced.

### [2-11] Timing of Automatic Setting

In the above embodiment or modification, presenting unit 113 automatically sets a notification time at a timing that precedes an estimated notification time by a predetermined amount of time or a timing at which a schedule is set; however, a notification time may be automatically set at any other timing. For example, setting unit 111 may automatically set a notification time of a schedule at startup of user device 10 or a at a fixed date and time, which notification time has not been reported to a user.

Setting unit 111 may vary a timing of an automatic setting depending on content or an importance level of a schedule. For example, setting unit 111 may advance a timing of an automatic setting in proportion to an importance level of a schedule; as a result, a time period during which a notification time of an important schedule can be presented to a user is made shorter. Setting of an alarm notification time is more likely to be approved for an important schedule, than for an unimportant schedule. Accordingly, by making it easier for an alarm for an important schedule to be set automatically, setting of an alarm by a user is further facilitated, and automatic setting of an alarm is effectively performed.

Setting unit 111 may vary a timing of an automatic setting depending on information stored in user device 10. For example, setting unit 111, as in the case of the abovementioned modification, may identify time periods during which a user does not use user device 10, based on a usage history of the user device, and change a timing of an automatic setting so that the timing is included within an identified time period closest to the timing, if the timing is not included within any one of the identified time periods.

If the screen shown in Fig. 5 is displayed, and thereafter a timing of an automatic setting has come before a user selects any of key images, so that the screen is replaced with the screen shown by Fig. 7 by setting unit 111, a user may feel inconvenienced. By inclusion of a timing of an automatic setting within the identified time period, such a switching of the screens, which may make a user feel inconvenienced, is unlikely to occur. It is of note that in the case in which a timing of an automatic setting has come before a user selects any of key images, setting unit 111 may perform an exceptional processing of prioritizing a user's operation over an automatic setting.

Setting unit 111 may vary a timing of an automatic setting depending on a situation of user device 10. For example, setting unit 111, when a timing of an automatic setting has come, may determine whether to perform an automatic setting based on a situation of user device 10, without immediately performing an automatic setting, which situation may be determined with reference to the situation table shown in Fig. 10. For example, if setting unit 111 determines that user device 10 is left at a user's bedside, which determination indicates that the user device will not used by the user for a while, the setting unit immediately performs an automatic setting.

If setting unit 111 determines that user device 10 is contained in a bag, a pocket, etc., which determination indicates that the user device soon may be used by a user, the setting unit performs an automatic setting unless the user operates the user device for a certain period of time; namely, the setting unit postpones an automatic setting if the user is likely to operate the user device. As a result of this processing, a user's intention is more likely to be reflected in an alarm setting, as compared to a case in which an automatic setting is made at a timing determined irrespective of a situation of user device 10.

### [2-12] Method for Estimating Notification Time

Estimating unit 112 may estimate a notification time using a method different from that used in the above embodiment. For example, estimating unit 112 may estimate an alarm notification time using a method for calculating an alarm notification date and time, which is disclosed in JP 2009-186324 A, or any other well-known method.

### [2-13] Categories of the Invention

The present invention may be embodied as: an information-processing device such as user device 10; another device providing functions described above, such as a wearable device or a server; or an information-processing system including devices. It is of note that user device 10 according to the above embodiment, which provides plural functions, can be considered as a system.

The present invention may be embodied as an information-processing method in which one of the devices performs its processing, or a program for causing a computer controlling one of the devices to function. The program may be provided to a computer via a recording medium such as an optical disk, or may be downloaded to the computer via a network such as the Internet, in which computer the program is installed to be used.

## Claims

1. A system comprising:
an estimating unit that estimates an alarm notification time;
a presenting unit that presents the estimated alarm notification time to a user; and
a setting unit that sets an alarm notification time based on at least one of a user's operation performed relative to the presentation of the estimated alarm notification time, a situation of a user device at which the estimated alarm notification time is presented, and information stored in the user device at which the estimated alarm notification time is presented.

2. The system according to Claim 1, wherein the setting unit, on detecting that the presenting unit has not presented the estimated alarm notification time by a predetermined point in time that precedes the estimated alarm notification time, sets the alarm notification time in the absence of a user's operation.

3. The system according to Claim 1 or 2, wherein the setting unit sets an alarm notification time for a particular schedule in the absence of a user's operation.

4. The system according to Claim 2 or 3, further comprising a notification unit that activates an alarm at the set notification time, wherein the notification unit activates an alarm differently depending on whether the alarm notification time is set according to a user's operation, or the alarm notification time is set in the absence of a user's operation.

5. The system according to any one of Claims 1 to 4, wherein the presenting unit determines a necessity of an alarm for a schedule based on an attribute of the schedule, and, on determining that an alarm should be set, presents the estimated alarm notification time to the user.

6. The system according to Claim 5, wherein the attribute of the schedule is a distance between a place at which a scheduled event will occur and a place at which the user is scheduled to be before the event occurs.

7. The system according to Claim 5, wherein the attribute of the schedule is a time period, a date and time belonging to the time period, a scheduled event being going to occur at the date and time.

8. The system according to Claim 5, wherein the attribute of the schedule is content of the schedule or an importance level of the schedule, the importance level being registered by the user.

9. The system according to any one of Claims 1 to 8, wherein:
the presenting unit presents the estimated notification time to the user by causing the estimated notification time to be displayed as information indicating content corresponding to an image, the image being selected from among plural images corresponding to different types of content; and
the setting unit, after the estimated notification time is caused to be displayed as the information, sets the alarm notification depending on whether a predetermined operation has been performed.

10. A program for causing a computer to function as:
an estimating unit that estimates an alarm notification time;
a presenting unit that presents the estimated alarm notification time to a user; and
a setting unit that sets an alarm notification time based on at least one of a user's operation performed relative to the presentation of the estimated alarm notification time, a situation of a user device at which the estimated alarm notification time is presented, and information stored in the user device at which the estimated alarm notification time is presented.
